# EUROPEAN PATENT APPLICATION

(11) **EP 4 566 706 A1**
(43) Date of publication of application: **11.06.2025**
(21) Application number: 24217344.1
(22) Date of filing: 04.12.2024
(51) Int. Cl.: B01J 19/00, C01B 32/159, C01B 32/16, C01B 32/164, B01J 8/00, B01J 8/10, B65G 17/06

(54) **SYSTEM AND METHOD FOR PRODUCING CARBON NANOTUBES**

(30) Priority: 04.12.2023 KR 20230173267
(71) Applicant: SK Innovation Co., Ltd., Seoul 03188 (KR)
(72) Inventor: KIM, Young Kwang, 34124 Daejeon (KR); KIM, Soo Bean, 34124 Daejeon (KR); CHUNG, Hyun Suk, 34124 Daejeon (KR); HAN, Yong Bin, 34124 Daejeon (KR)
(74) Representative: Prüfer & Partner mbB Patentanwälte · Rechtsanwälte

(57) **Abstract**

A carbon nanotube production system according to embodiments of the present disclosure includes: a reactor configured to generate a carbon nanotube fluid in a first direction; a conveyor unit which is arranged spaced apart from the reactor in the first direction, and comprises a mesh belt configured to capture carbon nanotube structures from the carbon nanotube fluid while continuously traveling in a second direction perpendicular to the first direction; and a collection unit configured to collect carbon nanotube units from the carbon nanotube structures. Further disclosed herein is a method for producing nanocarbon tubes, as well as a method for producing carbon nanotubes comprising a step of applying the system for producing carbon nanotubes as disclosed herein.

## Description

### [BACKGROUND OF THE INVENTION]

### 1. Field of the Invention

The present disclosure relates to a system for producing carbon nanotubes and a method for producing carbon nanotubes.

### 2. Description of the Related Art

Carbon nanotubes (CNTs) are materials used in many fields due to their excellent chemical stability and mechanical properties, as well as high thermal conductivity.

Depending on synthesis conditions, the carbon nanotubes are classified into: single-walled carbon nanotubes (SWCNTs) having a structure made by rolling up one layer of graphite and connecting ends thereof; double-walled carbon nanotubes (DWCNTs) having a shape in which two layers of the single-walled carbon nanotubes are arranged about a concentric axis; and multi-walled carbon nanotubes (MWCNTs) composed of a plurality of single-walled carbon nanotubes in a multi-layer.

As a method for synthesizing the carbon nanotubes, there are methods such as vapor deposition, electric discharge, laser ablation, high-pressure vapor deposition and similar methods. The synthesized carbon nanotubes have small particle sizes, such that final carbon nanotubes are generally obtained by aggregating their particles to improve handling properties.

In order to use as an additive, etc., the agglomerated carbon nanotubes need to be separated into individual carbon nanotube particles again. In this case, the process of separating the agglomerated carbon nanotubes again is complicated and takes a long period of time, thus a method for obtaining carbon nanotubes without the above-described process is required.

### [SUMMARY OF THE INVENTION]

An object of the present disclosure is to provide an improved system for producing carbon nanotubes, wherein this system is improved e.g., regarding improved process reliability and production efficiency.

Another object of the present disclosure is to provide a method for producing carbon nanotubes with improved process reliability and production efficiency. For example, upon applying the system and method for producing carbon nanotubes of the present disclosure, carbon nanotubes can simply be obtained without a separate post-process, which e.g., can result in reducing costs.

To achieve the above object, according to an aspect of the present disclosure, there is provided a system for producing carbon nanotubes including: a reactor configured to generate a carbon nanotube fluid in a first direction; a conveyor unit which is arranged spaced apart from the reactor in the first direction, and includes a mesh belt configured to capture carbon nanotube structures from the carbon nanotube fluid while continuously traveling in a second direction perpendicular to the first direction; and a collection unit configured to collect carbon nanotube units from the carbon nanotube structures. The presence of the mesh belt allows the capture of the carbon nanotube structures on its surface in the carbon nanotube fluid state as they are, thereby reducing the aggregation of the carbon nanotubes. Thereby, the necessity of applying further post-processing step(s) is reduced, preferably there is no post-processing step necessary at all, in order to obtain carbon nanotubes in an essentially non-aggregated state.

According to exemplary embodiments, the carbon nanotube fluid may include a single-walled carbon nanotube aerosol, and/or wherein the carbon nanotube units collected from the carbon nanotube structures are captured in a gaseous dispersion state. For example, the carbon nanotube units are dispersed in a gaseous medium, such as the carrier gas.

According to exemplary embodiments, the single-walled carbon nanotube aerosol may be a so-called cotton candy-like carbon nanotube (CNT) aerosol. A cotton candy-like CNT aerosol can for example be obtained by ridging the gas flow.

According to exemplary embodiments, the reactor may include, or is, a floating catalyst chemical vapor deposition (FC-CVD) reactor.

According to exemplary embodiments, the system may further include a carbon source inlet part coupled to a front end of the reactor and an outlet part coupled to a rear end of the reactor to discharge the carbon nanotube fluid in the first direction.

According to exemplary embodiments, a ratio of a moving speed (cm/s) of the mesh belt to a flow rate (cm³/s) at which the carbon nanotube fluid is discharged from the outlet part may be 0.16 cm⁻² to 0.65 cm⁻². The flow rate and the production volume are related, and the moving speed of the mesh may vary, depending on the production volume. It has been found out herein that a ratio of moving speed of the mesh belt to a flow rate as defined herein results in good yields.

According to exemplary embodiments, the system may further include a gas supply part configured to supply a carrier gas to the carbon source inlet part.

According to exemplary embodiments, the conveyor unit may further include rollers configured to drive the mesh belt.

According to exemplary embodiments, the collection unit may include a brush unit configured to collect the carbon nanotube structures with a predetermined size. A predetermined or specific size of the nanocarbon structures may depend e.g., on the production amount and the mesh speed. Further, it may also depend on the contact area between the brush and the mesh.

According to exemplary embodiments, the mesh belt may include openings through which the carbon nanotube fluid passes by penetrating the mesh belt.

According to exemplary embodiments, the system may further include a housing in which the mesh belt is accommodated, wherein the housing may include a vent portion through which the carbon nanotube fluid passing through the mesh belt is discharged.

According to exemplary embodiments, the vent portion may be positioned in a linear flow direction of the carbon nanotube fluid in the first direction.

According to exemplary embodiments, the system may include a plurality of reactors spaced apart from each other in the second direction.

According to exemplary embodiments, the plurality of reactors is present in the manufacturing section of the system for producing carbon nanotubes.

According to exemplary embodiments, one or more of the reactors being present in the system comprise one or more or all of the following: heating means, a carbon source inlet part, a gas supply part, and an outlet part.

According to another aspect of the present disclosure, there is provided a method for producing carbon nanotubes, including: generating a carbon nanotube fluid in a first direction; supplying the carbon nanotube fluid onto a mesh belt continuously traveling in a second direction perpendicular to the first direction to form carbon nanotube structures; and collecting carbon nanotube units from the carbon nanotube structures.

According to exemplary embodiments, the carbon nanotube fluid is a carbon aerosol

According to exemplary embodiments, the carbon nanotube fluid may be generated only in a single direction of the first direction.

According to exemplary embodiments, the step of generating a carbon nanotube fluid may include generating a single-walled carbon nanotube aerosol through a floating catalyst chemical vapor deposition (FC-CVD) process, and/or wherein the carbon nanotube units collected from the carbon nanotube structures are captured in a gaseous dispersion state..

According to exemplary embodiments, in the method for producing carbon nanotubes, the carbon nanotube structures are captured on the surface of the mesh belt in the carbon nanotube fluid state as they are, whereby the carbon nanotube units are obtained without a separate post-process. Accordingly, desirable carbon nanotube units can be obtained, preferably in predetermined sizes, for various further applications.

According to exemplary embodiments, the method for producing carbon nanotubes comprises a step of applying a system for producing carbon nanotubes as disclosed herein.

According to another aspect of the present disclosure, there is provided a carbon nanotube prepared by the method for producing carbon nanotubes.

The carbon nanotube production system according to exemplary embodiments of the present disclosure may capture carbon nanotubes (e.g., SWCNTs) in the manufactured form as they are. Accordingly, non-agglomerated carbon nanotubes may be rapidly produced.

The carbon nanotube production system according to exemplary embodiments of the present disclosure may include a mesh belt to efficiently collect the carbon nanotubes in an aerosol state. By directly passing a fluid including carbon nanotubes through the mesh belt, agglomeration of the carbon nanotubes may be prevented. Accordingly, carbon nanotubes having uniform physical properties may be produced. As a fluid which includes the carbon nanotubes, a carrier gas may be used.

According to the carbon nanotube production method according to exemplary embodiments of the present disclosure, it is possible to produce non-agglomerated carbon nanotubes in large quantities at a rapid speed.

### [BRIEF DESCRIPTION OF THE DRAWINGS]

The above and other objects, features and other advantages of the present disclosure will be more clearly understood from the following detailed description taken in conjunction with the accompanying drawings, in which:
FIG. 1 is a schematic view illustrating a carbon nanotube production system according to exemplary embodiments;
FIG. 2 is a schematic view illustrating a carbon nanotube production system according to a comparative example; and
FIG. 3 is a schematic view illustrating a carbon nanotube production system according to some exemplary embodiments.

### [DETAILED DESCRIPTION OF THE INVENTION]

The present disclosure provides a carbon nanotube production system having improved production efficiency.

In addition, the present disclosure provides a carbon nanotube production method with improved process reliability and production efficiency.

Hereinafter, the present disclosure will be described in detail with reference to the accompanying drawings. However, the embodiments are merely illustrative and the present disclosure is not limited to the specific embodiments described by way of example.

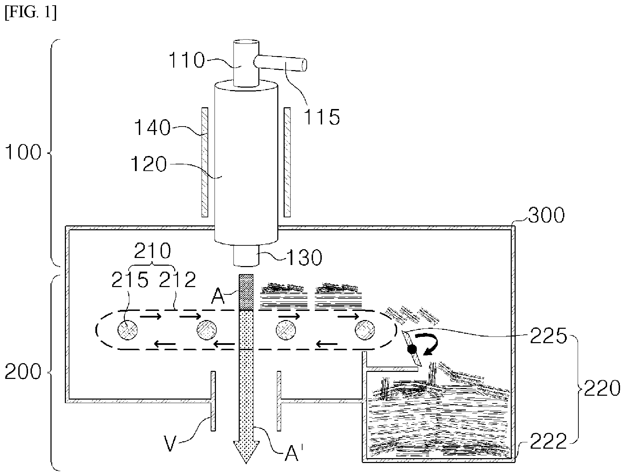

FIG. 1 is a schematic view illustrating a carbon nanotube production system according to exemplary embodiments. Hereinafter, the carbon nanotube production system and the production method will be described together with reference to FIG. 1.

Referring to FIG. 1, the carbon nanotube production system according to exemplary embodiments may include a manufacturing section 100 and a capture section 200. In the manufacturing section 100, a carbon source may react at a high temperature to manufacture carbon nanotubes of the present disclosure. In the capture section 200, the carbon nanotubes manufactured in the manufacturing section 100 may be gathered and collected.

The manufacturing section 100 may include a carbon source inlet part 110, a reactor 120 and an outlet part 130. The carbon source inlet part 110 may be coupled to a front end of the reactor 120, and the outlet part 130 may be coupled to a rear end of the reactor 120.

The reactor 120 may include a floating catalyst chemical vapor deposition (FC-CVD) reactor, and carbon nanotubes may be manufactured in the manufacturing section 100 by a floating catalyst chemical vapor deposition (FC-CVD). The floating catalyst chemical vapor deposition method is a method capable of synthesizing carbon nanotubes by continuously supplying a catalyst and a carbon source as a raw material while spraying them. Accordingly, unlike batch-wise synthesis, it is possible to continuously produce the carbon nanotubes.

The carbon source as a raw material for carbon nanotubes may be introduced into the carbon source inlet part 110. In addition, a mixture including a carbon source and a catalyst may be introduced into the carbon source inlet part 110.

The manufacturing section 100 may further include a gas supply part 115. A carrier gas may be input into the carbon source inlet part 110 through the gas supply part 115. The mixture including the carbon source and the catalyst introduced into the carbon source inlet part 110 may be sprayed with the carrier gas input into the gas supply part 115. Accordingly, the carbon source and the catalyst may be dispersed in an aerosol state inside the reactor 120.

The carbon source is not particularly limited, but for example, a hydrocarbon may be used as the carbon source. For example, the hydrocarbon may include a chain-type saturated aliphatic hydrocarbon such as methane, ethane, propane, hexane, heptane, octane, nonane, decane, dodecane, tetradecane, etc.; chain-type unsaturated aliphatic hydrocarbon having one or more double bonds, such as ethylene, acetylene, propylene, etc.; cyclic saturated aliphatic hydrocarbon such as cyclohexane, etc.; and cyclic unsaturated hydrocarbon such as benzene, and toluene, etc. These may be used alone or in combination of two or more thereof.

In addition, the carbon source may include a hydrocarbon-based organic compound. For example, the carbon source may include alcohol such as ethanol or propanol.

The catalyst is not particularly limited, but may include, for example, a transition metal compound or transition metal microparticles as a metal-based catalyst. In one embodiment, the catalyst is a Fe-based catalyst. The transition metal compound may be decomposed within the reactor 120, thereby generating transition metal particles that can function as a direct catalyst.

The transition metal may include, for example, iron, nickel, cobalt, scandium, titanium, vanadium, chromium, manganese, etc. The transition metal compound may include an organic or inorganic transition metal compound containing the transition metal. The organic transition metal compound may include, for example, ferrocene, nickelosene, cobaltocene, iron carbonyl, iron acetylacetonate, iron oleate, etc., and the inorganic transition metal compound may include, for example, iron chloride, etc. These may be used alone or in combination of two or more thereof.

The carrier gas may include, for example, argon, nitrogen, hydrogen, etc. These may be used alone or in combination of two or more thereof. In one embodiment, the carrier gas includes mainly hydrogen, which may contain, in minor amounts respectively compared to hydrogen, small amounts of nitrogen and argon which are used in adjustment.

The inside of the reactor 120 may include a catalyst aerosol. The catalyst particles may be dispersed in an aerosol state inside the reactor 120 by spraying the carrier gas, and the carbon source may be decomposed on the surface of the catalyst particles, thereby allowing the carbon nanotubes to grow.

The manufacturing section 100 may further include a heating means 140. The heating means 140 may be arranged outside the reactor 120, and the heating means 140 may be used to apply a heat energy necessary for a reaction of carbon nanotube growth to the reactor 120.

When performing a reaction while heating the reactor 120 by the heating means 140, the carbon source may be decomposed at a high temperature, thereby allowing the carbon nanotubes to grow. The heating means 140 may increase the temperature in the reactor 120 to about 600 °C to 1500 °C. In one embodiment, the temperature in the reactor is from about 1200 °C to about 1400 °C.

After the reaction is completed, a carbon nanotube aerosol may exist in the reactor 120. The carbon nanotube aerosol may be in a state where nano-sized carbon nanotube particles are dispersed in a gaseous medium (e.g., the carrier gas).

The reactor 120 may generate a carbon nanotube fluid in a first direction. The carbon nanotube fluid may include the carrier gas in which the carbon nanotubes are dispersed, and for example, the carbon nanotube fluid may include a single-walled carbon nanotube aerosol. As shown in FIG. 1, the reactor 120 may be a vertical type, and the first direction may be the direction of gravity. Alternatively, unlike the arrangement shown in FIG. 1, the reactor 120 may be a horizontal type, and the first direction may be a horizontal direction.

The carbon nanotube fluid may be discharged from the reactor 120 in the first direction through the outlet part 130. Accordingly, the carbon nanotubes in an aerosol state may be captured on a mesh belt to be described below, and an amount of the carbon nanotubes dispersed and lost to another space may be minimized.

Although not shown separately in the drawings, the outlet part 130 may include a flow rate control means for controlling the flow rate of the carbon nanotube fluid discharged therefrom, and may include, for example, a flow rate control means in the form of a propeller.

The carbon nanotube fluid may be generated only in a single direction of the first direction. Accordingly, it is possible to prevent the carbon nanotubes from being dispersed and lost.

Next, the carbon nanotube fluid may be supplied onto a conveyor unit (mesh belt) which travels continuously in a second direction perpendicular to the first direction to form carbon nanotube structures.

The capture section 200 may include a conveyor unit 210 and a collection unit 220. The conveyor unit 210 may include a mesh belt 212 and rollers 215, and the rollers 215 may drive the mesh belt 212. The mesh belt 212 may be arranged to be spaced apart from the outlet part 130 in the first direction, and may travel continuously in the second direction perpendicular to the first direction.

As shown in FIG. 1, when the reactor 120 is the vertical type, the first direction may be the direction of gravity, and the second direction may be the horizontal direction. Alternatively, unlike the arrangement shown in FIG. 1, when the reactor 120 is the horizontal type, the first direction may be the horizontal direction and the second direction may be the direction of gravity.

The carbon nanotube structures may be captured on the surface of the mesh belt 212. While a discharge stream A including the carbon nanotube fluid discharged from the outlet part 130, for example, the single-walled carbon nanotube aerosol, passes through the mesh belt 212, the carbon nanotube structures remain on the surface of the mesh belt 212, and an air stream A' including the microparticle catalyst, etc. may be exhausted through the mesh belt. The carbon nanotube structure may include a plurality of individual carbon nanotubes, and each carbon nanotube may be aggregated due to van der Waals forces.

The mesh belt 212 may be driven by the rollers 215 without a separate support, and may include openings through which the carbon nanotube fluid can pass. Accordingly, the discharge stream A may be exhausted through a first portion adjacent to the reactor 120 of the mesh belt 212, and a second portion of the mesh belt 212 spaced apart from the first portion in the first direction. Since the discharge stream may be exhausted while continuously traveling, the carbon nanotubes included in the carbon nanotube structures captured on the surface of the mesh belt 212 may not be excessively aggregated.

The mesh belt 212 may have an appropriate line width and pitch to capture only the carbon nanotubes from the discharge stream. The mesh belt 212 may have a line width of about 1 *µ*m to 3*µ*m, and a pitch of about 4 *µ*m to 20 *µ*m.

Within the above range, the carbon nanotubes may be captured with high efficiency while the air stream A' may pass through the mesh belt without difficulty, and the carbon nanotubes may be continuously produced.

A ratio of a moving speed (cm/s) of the mesh belt 212 to a flow rate (cm³/s) at which the carbon nanotube fluid is discharged from the outlet part 130 may be 0.16 cm⁻² to 0.65 cm⁻². In some embodiments, the ratio of the moving speed (cm/s) of the mesh belt 212 to the flow rate (cm³/s) at which the carbon nanotube fluid is discharged from the outlet part 130 may be 0.23 cm⁻² to 0.42 cm⁻² or 0.3 cm⁻² to 0.35 cm⁻². Within the above range, the production speed may be increased while reducing the loss of carbon nanotubes, thereby improving the production efficiency of carbon nanotubes.

Next, carbon nanotube units may be collected from the carbon nanotube structures.

The carbon nanotube structures captured on the surface of the continuously traveling mesh belt 212 may be collected in the collection unit 220. The collection unit 220 may include a collection container 222 in which the carbon nanotubes are collected, and may include a brush unit 225 configured to collect the carbon nanotubes from the surface of the mesh belt 212.

The mesh belt 212 moves in the second direction, and the collection unit 220 may be arranged to be spaced apart from the mesh belt 212 in the second direction. Accordingly, the carbon nanotube structures on the surface of the mesh belt 212 may move in the second direction to be collected in the collection unit 220.

The carbon nanotube structures may be collected from the surface of the mesh belt 212 by the brush unit 225. The brush unit 225 may continuously rotate while in contact with the surface of the mesh belt 212, thereby collecting carbon nanotube structures with a predetermined size and gathering them into the collection container 222. For example, the carbon nanotube structures may be separated by the brush unit 225, such that the carbon nanotube units, which are individual carbon nanotube particles, may be collected into the collection container 222.

Although not shown separately in the drawings, the brush unit 225 may be disposed between the mesh belt 212 and the collection container 222, or may be fixed while in contact with the surface of the mesh belt 212 to scrape the carbon nanotubes such that the carbon nanotube units may be collected in the collection container 222. The brush unit 225 may rotate in a direction opposite to a moving direction of the mesh belt 212 at a portion where it comes into contact with the mesh belt 212. Accordingly, the brush unit 225 may scrape the carbon nanotubes from the surface of the mesh belt 212 as a scraper, and the carbon nanotube units may be collected in the collection container 222.

The conveyor unit 210 may include at least one roller 215 for driving the mesh belt 212. The number of rollers 215 may be increased or decreased in consideration of the length, density, and traveling speed of the mesh belt 212. As described above, the carbon nanotube units collected in the collection container 222 may be maintained in an optimal state for subsequent processing by minimizing agglomeration thereof.

The carbon nanotube unit may include single-walled carbon nanotubes (SWCNTs), multi-walled carbon nanotubes (MWCNTs), thin-walled carbon nanotubes (TWCNTs), etc., and may include, for example, the SWCNTs.

The carbon nanotube production system may include the capture section 200 inside a housing 300 in which the mesh belt 212 is accommodated. When the carbon nanotube fluid is discharged from the outlet part 130, the housing 300 may separate an internal space from an outside so that the carbon nanotubes, which are microparticles, are not lost into the air.

The housing 300 may include a vent portion V through which the air stream A' including the carbon nanotube fluid, for example, a residual catalyst, etc., which has passed through the mesh belt 212, is discharged. For example, the vent portion V may be positioned in a linear flow direction of the carbon nanotube fluid in the first direction. Accordingly, the carbon nanotube fluid may pass through the mesh belt in the shortest path to discharge the air stream A', and an eddy current caused by the gas stream inside the housing 300 may be minimized. Accordingly, it is possible to prevent the very light individual carbon nanotubes from being lost or dispersed by the air current inside the housing 300.

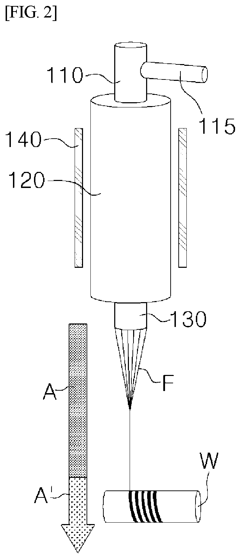

FIG. 2 is a schematic view illustrating a carbon nanotube production system according to a comparative example.

Referring to FIG. 2, the carbon nanotube production system according to the comparative example produces carbon nanotube fibers by aggregating and winding carbon nanotubes included in the discharge stream A discharged from the reactor 120 into a fiber form F. In this case, the carbon nanotubes aggregated in the direction of gravity are obtained by winding them onto the surface of the winding means W in the fiber form F, and the carbon nanotube fibers are excessively aggregated in a diameter direction and a length direction of the carbon nanotubes.

The carbon nanotube fibers produced from the carbon nanotube production system according to the comparative example need to be reprocessed or post-processed to obtain individual carbon nanotubes, which may be disadvantageous in terms of process and economy.

The carbon nanotube production system according to the present disclosure may capture carbon nanotube structures on the surface of the mesh belt in the carbon nanotube fluid state as they are in order to reduce the aggregation of the carbon nanotubes. Accordingly, the carbon nanotube units may be simply obtained without a separate post-process, thereby improving the efficiency of carbon nanotube production.

The carbon nanotube production system according to exemplary embodiments may include one or more manufacturing sections 100. For example, the carbon nanotube production system may include one to ten manufacturing sections 100. Accordingly, it is possible to continuously produce the carbon nanotubes in large quantities.

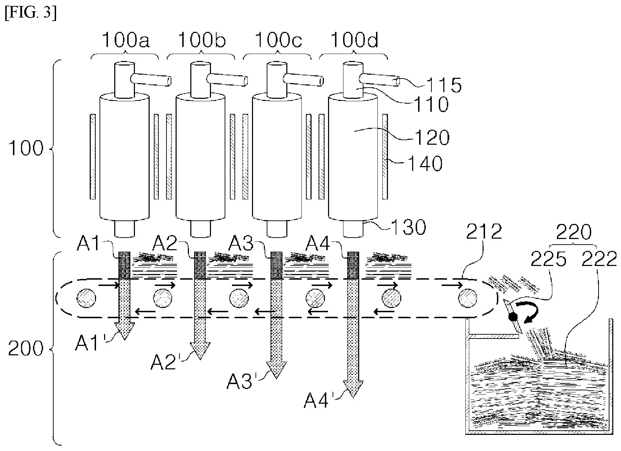

FIG. 3 is a schematic view illustrating a carbon nanotube production system according to exemplary embodiments. Structures and configurations substantially the same as or similar to those described with reference to FIG. 1 will not be described in detail.

Referring to FIG. 3, the carbon nanotube production system may include a plurality of manufacturing sections 100a, 100b, 100c and 100d. FIG. 3 illustrates an example in which there are four manufacturing sections 100, but the number of manufacturing sections 100 may vary as described above. In FIG. 3, the housing 300 is not shown for the convenience of illustration.

Each of the manufacturing sections 100a, 100b, 100c and 100d may include a respective reactor.

In exemplary embodiments, the plurality of manufacturing sections may include a first manufacturing section to an nth manufacturing section, where n may be an integer of 2 to 10. The first manufacturing section to the nth manufacturing section may be sequentially arranged to be spaced apart from each other in the second direction.

Continuously referring to FIG. 3, the plurality of manufacturing sections may be a first manufacturing section 100a, a second manufacturing section 100b, a third manufacturing section 100c and a fourth manufacturing section 100d arranged in this order in the second direction.

In exemplary embodiments, a flow rate at which the carbon nanotube fluid of the m+1 manufacturing section is discharged may be greater than a flow rate at which the carbon nanotube fluid of the m manufacturing section is discharged. Herein, m is an integer of 1 to 9 and a number smaller than n.

In the plurality of manufacturing sections, a manufacturing unit positioned closer to the collection unit 220 may have a greater flow rate at which the carbon nanotube fluid is discharged. The greater the flow rate, the greater the amount of carbon nanotube structures captured on the surface of the mesh belt 212.

When the aerosol discharge flow rate of the first manufacturing section 100a, which discharges the carbon nanotubes on the mesh belt 212 first in the second direction, is the smallest, the amount of carbon nanotube structures captured on the surface of the mesh belt 212 may be relatively small, and thus, the mesh may be less clogged. Accordingly, the carbon nanotubes included in the discharge streams A2, A3 and A4 of the subsequent second to fourth manufacturing sections 100b, 100c and 100d may be captured with high efficiency, and the air streams A2', A3' and A4' after the carbon nanotubes are captured may smoothly pass through the mesh belt 212.

In exemplary embodiments, unlike as shown in FIG. 3, the flow rates at which the aerosols of the plurality of manufacturing sections are discharged may be the same as each other.

In general, carbon nanotubes manufactured by the FC-CVD method are obtained by being aggregated in the fiber form and wound outside the exhaust port. The carbon nanotube fibers are in a state where countless short carbon nanotubes are aggregated in the length direction and diameter direction. In order to use them in various fields, the carbon nanotube fibers should be subjected to a process of separating them into single-strand carbon nanotubes and/or short carbon nanotubes.

Since the carbon nanotube units produced from the carbon nanotube production system of the present disclosure are captured in a gaseous dispersion state, for example, in an aerosol state, immediately after being produced in the manufacturing section, carbon nanotube structures with minimized aggregation may be obtained.

Accordingly, short carbon nanotubes may be used without going through a separate process after being obtained, and the productivity of the carbon nanotubes may be increased.

The contents described above are merely an example of applying the principle of the present disclosure, and other configurations may be further included.

## Claims

1. A system for producing carbon nanotubes comprising:
a reactor (120) configured to generate a carbon nanotube fluid in a first direction;
a conveyor unit (210) which is arranged spaced apart from the reactor (120) in the first direction, and comprises a mesh belt (212) configured to capture carbon nanotube structures from the carbon nanotube fluid while continuously traveling in a second direction perpendicular to the first direction; and
a collection unit (220) configured to collect carbon nanotube units from the carbon nanotube structures.

2. The system for producing carbon nanotubes according to claim 1, wherein the carbon nanotube fluid comprises a single-walled carbon nanotube aerosol, and/or wherein the carbon nanotube units collected from the carbon nanotube structures are captured in a gaseous dispersion state.

3. The system for producing carbon nanotubes according to claim 1 or 2, wherein the reactor (120) comprises a floating catalyst chemical vapor deposition (FC-CVD) reactor.

4. The system for producing carbon nanotubes according to any one of claims 1 to 3, further comprising a carbon source inlet part (110) coupled to a front end of the reactor and an outlet part (130) coupled to a rear end of the reactor to discharge the carbon nanotube fluid in the first direction, preferably wherein a ratio of a moving speed (cm/s) of the mesh belt (212) to a flow rate (cm³/s) at which the carbon nanotube fluid is discharged from the outlet part (130) is 0.16 cm⁻² to 0.65 cm⁻².

5. The system for producing carbon nanotubes according to any one of claims 1 to 4, further comprising a gas supply part (115) configured to supply a carrier gas to the carbon source inlet part (110).

6. The system for producing carbon nanotubes according to any one of claims 1 to 5, wherein the conveyor unit (210) further comprises rollers (215) configured to drive the mesh belt (212).

7. The system for producing carbon nanotubes according to one of claims 1 to 6, wherein the collection unit (220) comprises a brush unit (225) configured to collect the carbon nanotube structures with a predetermined size.

8. The system for producing carbon nanotubes according to any one of claims 1 to 7, wherein the mesh belt (212) comprises openings through which the carbon nanotube fluid passes by penetrating the mesh belt (212).

9. The system for producing carbon nanotubes according to claim 8, further comprising a housing (300) in which the mesh belt (212) is accommodated, wherein the housing comprises a vent portion V through which the carbon nanotube fluid passing through the mesh belt (212) is discharged, preferably wherein the vent portion V is positioned in a linear flow direction of the carbon nanotube fluid in the first direction.

10. The system for producing carbon nanotubes according to any one of claims 1 to 9, wherein the system includes a plurality of reactors (120) spaced apart from each other in the second direction.

11. A method for producing carbon nanotubes, comprising:
generating a carbon nanotube fluid in a first direction;
supplying the carbon nanotube fluid onto a mesh belt (212) continuously traveling in a second direction perpendicular to the first direction to form carbon nanotube structures; and
collecting carbon nanotube units from the carbon nanotube structures.

12. The method for producing carbon nanotubes according to claim 11, wherein the carbon nanotube fluid is generated only in a single direction of the first direction.

13. The method for producing carbon nanotubes according to claim 11 or 12, wherein the step of generating a carbon nanotube fluid comprises generating a single-walled carbon nanotube aerosol through a floating catalyst chemical vapor deposition (FC-CVD) process, and/or wherein the carbon nanotube units collected from the carbon nanotube structures are captured in a gaseous dispersion state.

14. The method for producing carbon nanotubes according to any one of claims 11 to 13, wherein the carbon nanotube structures are captured on the surface of the mesh belt in the carbon nanotube fluid state as they are, whereby the carbon nanotube units are obtained without a separate post-process, optionally whereafter the obtained carbon nanotube units are further used for various further applications..

15. The method for producing carbon nanotubes according to any one of claims 11 to 14, comprising a step of applying a system for producing carbon nanotubes as defined in any one of claims 1 to 10.
